# FASCICULE DE BREVET EUROPEEN

(11) **EP 2 721 306 B1**
(45) Date de publication et mention de la délivrance du brevet: **18.05.2016**
(21) Numéro de dépôt: 12731128.0
(22) Date de dépôt: 11.06.2012
(51) Int. Cl.: F04D 29/52, F04D 29/54, F04D 29/68, F01D 5/14

(54) **ÉLÉMENT DE TURBOMACHINE**
TURBOMASCHINENELEMENT
TURBOMACHINE ELEMENT

(30) Priorité: 14.06.2011 FR 1155158
(43) Date de publication de la demande: 23.04.2014
(73) Titulaire: Snecma, 75015 Paris (FR)
(72) Inventeur: PESTEIL, Agnès, F-77550 Moissy-cramayel Cedex (FR); PERROT, Vincent, F-77550 Moissy-cramayel Cedex (FR); BONIFACE, Jean-Christophe, Gérard, Roger, F-75011 Paris (FR)
(74) Mandataire: Calvo de Nó, Rodrigo
(86) Numéro de dépôt international: PCT/FR2012/051306
(87) Numéro de publication internationale: WO 2012/172246

(56) Documents cités:
- EP-A1- 1 927 723
- WO-A1-2008/046389
- DE-A1-102009 033 754
- US-A- 2 844 001
- US-A- 4 076 454

## Description

La présente invention concerne le domaine des turbomachines, et en particulier un élément de turbomachine comprenant un aubage avec une pluralité d'aubes décalées les unes des autres en une direction latérale et des dispositifs de génération de tourbillons disposés en amont dudit aubage en une direction axiale perpendiculaire à ladite direction latérale.

On entend par turbomachine, dans le présent contexte, toute machine dans laquelle peut s'opérer un transfert d'énergie entre un écoulement de fluide et au moins un aubage, comme, par exemple, un compresseur, une pompe, une turbine, ou bien une combinaison d'au moins deux de ceux-ci. Une telle turbomachine peut comprendre plusieurs étages, chaque étage comportant normalement deux aubages, à savoir un aubage mobile et un aubage de redressement. Chaque aubage comporte une pluralité d'aubes décalées les unes des autres en une direction latérale. Typiquement, ces aubes sont arrangées radialement autour d'un axe central. Ainsi, un tel aubage forme un rotor, quand il s'agit d'un aubage mobile, ou un stator, quand il est un aubage de redressement. Dans un tel stator, chaque aube est typiquement reliée à une virole interne par une extrémité proximale, ou pied d'aube, et à une virole externe par une extrémité distale ou tête d'aube. Les viroles interne et externe sont normalement sensiblement coaxiales, comme illustré par exemple dans la demande de brevet français avec le numéro de publication FR 2 896 019.

Chaque aube présente un profil aérodynamique avec un extrados, un intrados, un bord d'attaque et un bord de fuite qui, en fonctionnement, sont soumis à l'écoulement d'un fluide de travail. Dans la description qui suit, les termes "amont" et "aval" sont définis par rapport au sens de circulation normal de ce fluide de travail. Sous certaines conditions de fonctionnement, en particulier dans un compresseur à haute pression, des décollements de cet écoulement par rapport à l'extrados peuvent se produire. Spécialement au pied d'aube, un décollement tridimensionnel peut se produire, formant un dénommé « tourbillon de coin ». Ce tourbillon de coin est généré par l'accumulation de particules à faible énergie cinétique dans le coin formé par l'extrados et la virole interne formant la base de l'aube. Il cause notamment une perte de rendement sensible du compresseur.

Afin de réduire les tourbillons de coin, il a été proposé, dans la demande internationale de brevet WO 2008/046389 A1, de disposer des dispositifs de génération de tourbillons en amont de l'aubage. En fonctionnement, les tourbillons générés par ces dispositifs apportent de l'énergie à l'écoulement des couches limites adjacentes à l'extrados, afin d'empêcher le décollement local formant le tourbillon de coin de l'aube.

Toutefois, la mise en oeuvre de ces dispositifs de génération de tourbillons pose certains problèmes. D'une part, il est préférable que le dispositif de génération de tourbillons offre le moins de résistance possible à l'écoulement du fluide de travail, de manière à minimiser les pertes aérodynamiques. D'autre part, ce dispositif doit de préférence rediriger localement l'écoulement du fluide, de manière à diriger vers l'extrados le tourbillon qu'il génère. Typiquement, ceci implique que le dispositif de génération de tourbillons soit lui-même profilé, avec, à son bord d'attaque, un angle d'attaque réduit par rapport à l'écoulement général du fluide, mais présentant toutefois une plus grande incidence à son bord de fuite. Il est toutefois difficile et coûteux de fabriquer un élément de turbomachine dans lequel soient intégrés des dispositifs profilés de génération de tourbillons de taille normalement petite.

La présente invention vise à remédier à ces inconvénients et proposer un élément de turbomachine comprenant un aubage avec une pluralité d'aubes décalées les unes des autres en une direction latérale et des dispositifs de génération de tourbillons disposées en amont dudit aubage en une direction axiale perpendiculaire à ladite direction latérale pour réduire de manière effective les décollements locaux aux extrados des aubes avec des pertes aérodynamiques réduites, mais dont la fabrication soit facilitée.

Selon un premier aspect, dans au moins un mode de réalisation, ce but est atteint grâce au fait que l'élément de turbomachine comprend un ensemble de plusieurs dispositifs de génération de tourbillons en amont d'une extrémité de chaque aube, les dispositifs de génération de tourbillons de chaque ensemble étant décalés tant latéralement qu'axialement entre eux. En particulier, chaque ensemble peut comprendre au moins trois dispositifs de génération de tourbillons. Le décalage tant axial que tangentiel entre les différent dispositifs de génération de tourbillons dans l'ensemble en amont de chaque aube permet de rediriger les tourbillons générés par ceux-ci vers l'extrados de l'aube, même si chaque dispositif individuel est orienté avec un angle d'attaque réduit, par exemple entre 5 et 15 degrés, par rapport à l'écoulement du fluide, afin de minimiser sa résistance, et présente une forme simple afin de faciliter sa production.

Selon un deuxième aspect, au moins certains des dispositifs de génération de tourbillons comportent au moins une ailette. En particulier, l'ailette peut présenter une corde sensiblement droite. Une telle ailette peut former un dispositif de génération de tourbillons particulièrement simple à fabriquer. Toutefois, d'autres types de dispositifs de génération de tourbillons pourraient aussi être considérés alternativement aux ailettes ou en combinaison avec celles-ci. Par exemple, au moins certains des dispositifs de génération de tourbillons peuvent comporter au moins une encoche formée dans un support de l'extrémité d'aube.

Selon un troisième aspect, dans chaque ensemble, les dispositifs de génération de tourbillons présentent des orientations sensiblement parallèles, ce qui permet de simplifier encore plus la fabrication des dispositifs de génération de tourbillons, tout en limitant les pertes aérodynamiques.

Selon un quatrième aspect, les aubes de l'aubage de l'élément de turbomachine sont arrangées radialement autour d'un axe central. Ainsi, la turbomachine est adaptée à ce que l'aubage mobile tourne autour de cet axe central. Toutefois, d'autres formes de turbomachine, avec, par exemple, un déplacement linéaire des aubes, sont en principe possibles. Dans l'aubage radial, chaque aube présente une extrémité proximale dite pied d'aube, et une extrémité distale dite tête d'aube. Dans ce cas, un ensemble de plusieurs dispositifs de génération de tourbillons peut être situé en amont de chaque pied d'aube. Les tourbillons de coin étant plus susceptibles de se former au pied d'aube, l'utilité des dispositifs de génération de tourbillons est plus grande à cet endroit. Toutefois, alternativement ou en complément à cette disposition, un ensemble de plusieurs dispositifs de génération de tourbillons peut aussi être situé en amont de la tête d'aube. Bien que des tourbillons de coin soient moins susceptibles de se former en tête d'aube, les dispositifs de génération de tourbillons peuvent aussi être éventuellement utiles pour combattre un tel phénomène à cet endroit.

Selon un cinquième aspect, l'aubage de l'élément de turbomachine est un aubage de redressement. Dans un compresseur, et en particulier dans un compresseur haute pression, les tourbillons de coin sont plus susceptibles de se former au niveau de l'aubage de redressement. Toutefois, alternativement ou en complément à un tel aubage de redressement, l'élément de turbomachine peut comprendre un aubage mobile, et en particulier un rotor, et des tels dispositifs de génération de tourbillons disposés en amont de l'aubage mobile afin d'y combattre la formation de tourbillons de coin.

Les dispositifs de génération de tourbillons peuvent être formés de manière intégrale à l'aubage, par exemple en intégrant leur forme dans un moule de fonderie de l'aubage et/ou en les usinant dans la masse. Alternativement, toutefois, ils peuvent être produits séparément et fixés devant les aubes. Dans chaque cas, la hauteur des dispositifs de génération de tourbillons peut notamment être de l'ordre de 2 à 8% celle des aubes directement en aval de ceux-ci.

La présente description concerne aussi une turbomachine comprenant au moins un élément de turbomachine suivant l'invention. Cette turbomachine peut être un compresseur, une pompe, une turbine, ou bien une combinaison d'au moins deux de ceux-ci, telle que, par exemple, un turboréacteur, un turbomoteur, un turbopropulseur, une turbopompe et/ou un turbocompresseur. En particulier, dans cette turbomachine, ledit élément de turbomachine peut être un élément de compresseur. Toutefois, cet élément de turbomachine pourrait alternativement être un élément de pompe ou de turbine.

L'invention sera bien comprise et ses avantages apparaîtront mieux, à la lecture de la description détaillée qui suit, de cinq modes de réalisation représentés à titre d'exemples non limitatifs. La description se réfère aux dessins annexés sur lesquels :
- la figure 1 représente, de façon schématique, une coupe longitudinale d'un compresseur de l'art antérieur ;
- la figure 2 représente, de façon schématique, une perspective d'une aube du compresseur de la figure 1, soumise à un tourbillon de coin ;
- la figure 3 représente de façon schématique et en perspective, un segment d'un élément de compresseur suivant un premier mode de réalisation ;
- la figure 4 représente de façon schématique une vue en coupe développée du segment de la figure 3 suivant le plan courbe IV-IV ;
- la figure 5 représente de façon schématique une vue en coupe longitudinale du segment des figures 3 et 4 suivant la ligne V-V ;
- la figure 6 représente de façon schématique une vue en coupe longitudinale d'un élément de compresseur suivant un deuxième mode de réalisation ;
- la figure 7 représente de façon schématique une vue en coupe longitudinale d'un élément de compresseur suivant un troisième mode de réalisation ;
- la figure 8 représente de façon schématique une vue en coupe longitudinale d'un étage de turbine formé par un stator de turbine suivant un quatrième mode de réalisation et un rotor de turbine suivant un cinquième mode de réalisation.

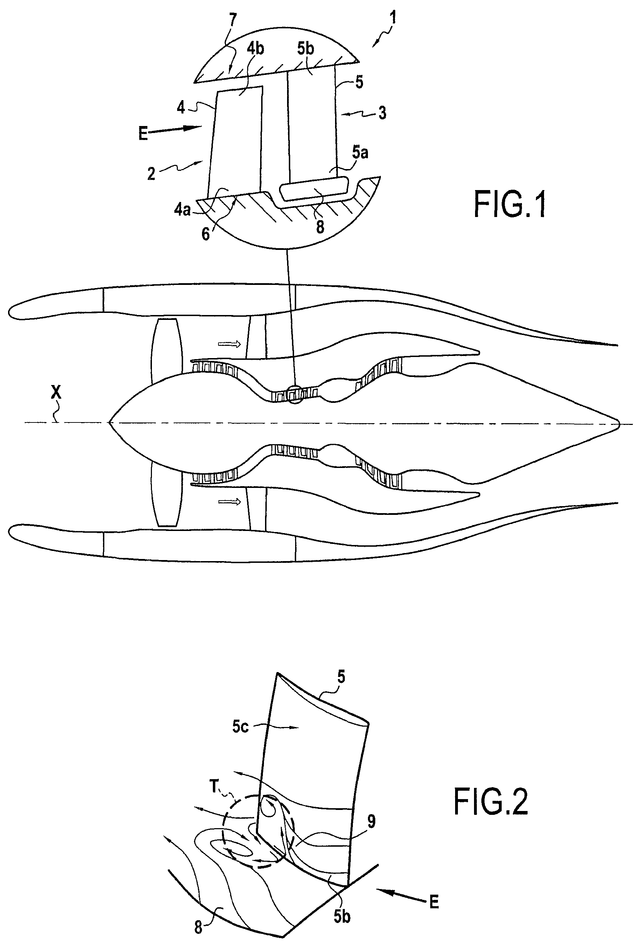

Sur la figure 1 est illustré un turboréacteur à double flux et, en plus grand détail, un étage 1 de son compresseur haute pression. Cet étage de compresseur 1 typique de l'art antérieur comporte deux parties principales : un aubage mobile rotatif dit rotor 2, et un aubage fixe de redressement dit stator 3. Tant dans le rotor 2 comme dans le stator 3, les aubes 4, 5 sont arrangées radialement autour d'un axe central X. Ainsi, chaque aube 4 du rotor 2 présente une extrémité proximale 4a, dite pied d'aube, solidaire d'un moyeu rotatif 6, une extrémité distale 4b, dite tête d'aube, adjacente d'une virole externe fixe 7 d'un carter du compresseur 1. De son côté, chaque aube 5 du stator 3 présente une extrémité proximale 5a, dite aussi pied d'aube, solidaire d'une virole interne fixe 8, et une extrémité distale 5b, dite aussi tête d'aube, solidaire de la virole externe 7.

En fonctionnement, la rotation des aubes 4 du rotor 2 autour de l'axe central X impulse le fluide de travail, normalement un gaz ou un mélange de gaz tel que l'air, en même temps en une direction axiale parallèle à l'axe central X, et de manière circonférentielle en une direction latérale perpendiculaire à la direction axiale. En aval du rotor 2, les aubes 5 du stator 3 redressent l'écoulement du fluide de travail en direction axiale et, ce faisant, transforment une grande partie de la pression dynamique du fluide de travail en pression statique.

Un problème particulier d'un tel étage de compresseur 1 est illustré sur la figure 2. Au niveau du pied d'aube 5b, du côté de l'extrados 5c d'une aube 5 du stator 3, la confluence des couches limites de l'extrados 5c et de la virole interne 8 produit une zone de basse énergie pouvant provoquer un décollement 9 dit « tourbillon de coin ». Ce tourbillon de coin 9 a un impact clairement négatif sur les performances aérodynamiques du compresseur 1. Au stator 3, il peut être encore exacerbé par une recirculation du fluide de travail, sous la virole interne 8, de l'aval à l'amont du stator 3, générant un débit de fuite entre le moyeu 6 du rotor 2 et la virole interne 8, débit de fuite qui perturbe l'écoulement du fluide moteur directement en amont des aubes 5 du stator 3. Toutefois, des tourbillons de coin peuvent se former aussi sur les aubes 4 du rotor 2, et tant dans le rotor 2 comme dans le stator 3, ils peuvent se former tant en pied d'aube comme en tête d'aube.

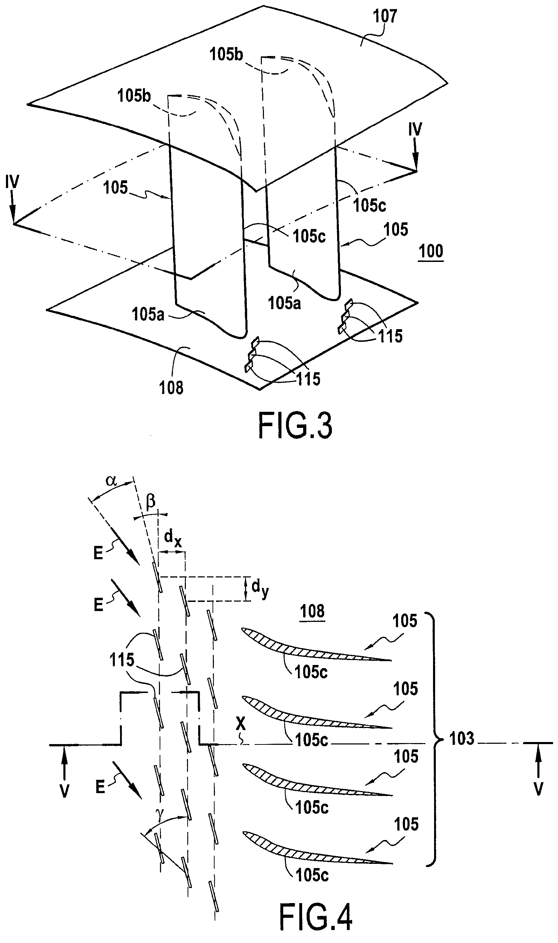

La figure 3 illustre un premier mode de réalisation dans lequel un élément de compresseur 100 comprend un aubage de redressement 103 sous forme de stator, avec une pluralité d'aubes 105 arrangées radialement autour d'un axe central X, et décalées les unes des autres en une direction latérale, c'est-à-dire circonférentielle. Cet élément de compresseur 100 est destiné à être situé directement en aval d'un rotor (non illustré) tournant autour de l'axe central X, afin de redresser l'écoulement du fluide de travail en aval du rotor vers une direction axiale sensiblement parallèle à l'axe central X et perpendiculaire à la direction latérale. Dans cet aubage de redressement 103, comme dans l'art antérieur, chaque aube 105 présente un pied d'aube 105a solidaire d'une virole interne 108, et une tête d'aube 105b solidaire d'une virole externe 107.

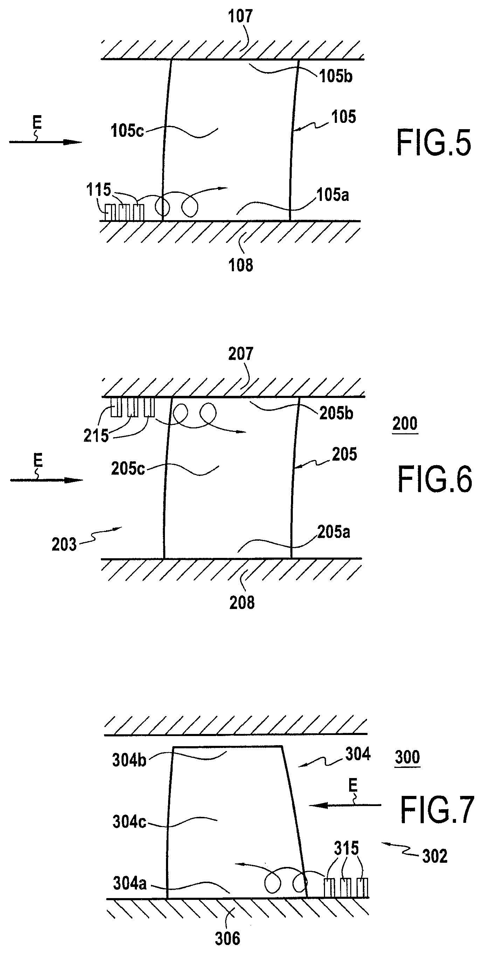

Afin d'empêcher, au moins partiellement, la formation d'un tourbillon de coin au pied d'aube 105a, entre l'extrados 105c et la virole interne 108, l'élément de compresseur 100 suivant ce premier mode de réalisation comporte aussi un ensemble de trois dispositifs 115 de génération de tourbillons en amont de chaque pied d'aube 105a, sous forme d'ailettes droites solidaires de la virole interne 108. La forme de ces ailettes 115 étant comparativement simple, leur fabrication, même de manière intégrée à la virole interne 108, ne pose pas des problèmes particuliers avec les procédés de fabrication connus de la personne du métier. Elles peuvent notamment avoir été moulées d'une pièce avec la virole interne 108 et le reste de l'aubage de redressement 103, et éventuellement été soumises à une reprise de finition en sortie de fonderie, ou avoir été fabriquées séparément et ensuite fixées par des moyens conventionnels sur la virole interne 108. Alternativement, elles peuvent toutefois avoir été usinées dans la masse de la virole interne 108. Typiquement, leur hauteur peut être de l'ordre de 2 à 8% de celle des aubes 105. Comme l'on peut voir en particulier sur les figures 4 et 5, ces ailettes 115 sont sensiblement parallèles entre elles et présentent un angle d'attaque a, pouvant être, par exemple, entre 5 et 15 degrés, par rapport à la direction de l'écoulement E du fluide de travail en amont du stator 103, de manière à générer des tourbillons en aval de chaque ailette 115, mais sans présenter une résistance excessive à cet écoulement. Elles présentent aussi un angle β par rapport à la direction latérale. Entre elles, chaque paire d'ailettes 115 adjacentes présente un décalage axial dₓ et un décalage latéral d_{y}. L'alignement des ailettes 115 présente donc un angle γ=arctan(dₓ/d_{y}) par rapport à la direction latérale qui, dans le mode de réalisation illustré, est sensiblement supérieur à l'angle β. Les décalages axial et latéral des ailettes 115 de chaque ensemble, dirigent les tourbillons générés par chaque ailette 115, par interaction mutuelle, vers l'extrados 105c de l'aube 105, de manière à plus effectivement empêcher le décollement local pouvant causer un tourbillon de coin. Le tourbillon crée par chaque ailette 115 est renforcé par celui de l'ailette 115 directement en aval, laquelle modifie aussi légèrement la direction du tourbillon renforcé en direction de l'axe de sa corde. Bien que, dans le mode de réalisation illustré, tant le décalage axial dₓ comme le décalage latéral d_{y} soient les mêmes entre la première et la deuxième ailette 115 qu'entre la deuxième et la troisième ailette 115 de chaque ensemble, il est aussi envisageable d'avoir des décalages différents entre les différentes rangées de dispositifs de génération de tourbillons en aval de l'aubage.

Bien que dans ce premier mode de réalisation les dispositifs de génération de tourbillons soient disposés sur la virole intérieure, afin d'empêcher la formation d'un tourbillon de coin au pied d'aube, il est aussi possible, alternativement ou en complément à cet arrangement, de situer des dispositifs analogues sur la virole extérieure afin d'empêcher la formation d'un tourbillon de coin à la tête d'aube. Ainsi, dans un deuxième mode de réalisation illustré sur la figure 6, un élément de compresseur 200 comprend aussi un aubage de redressement 203 sous forme de stator, avec une pluralité d'aubes 205 arrangées radialement autour d'un axe central X, et décalées les unes des autres en une direction latérale, c'est-à-dire circonférentielle. Cet élément de compresseur 200 est aussi destiné à être situé directement en aval d'un rotor (non illustré) tournant autour de l'axe central X, afin de redresser l'écoulement du fluide de travail en aval du rotor vers une direction axiale sensiblement parallèle à l'axe central X et perpendiculaire à la direction latérale. Dans cet aubage de redressement 203, comme dans le premier mode de réalisation, chaque aube 205 présente un pied d'aube 205a solidaire d'une virole interne 208, et une tête d'aube 205b solidaire d'une virole externe 207. Par contre, dans ce deuxième mode de réalisation, l'ensemble de trois dispositifs 215 de génération de tourbillons est situé en amont de chaque tête d'aube 205a. La forme, arrangement et fonctionnement de ces ailettes 215 est, pour le reste, sensiblement analogue à celui des ailettes du premier mode de réalisation, avec un angle d'attaque relativement faible, par exemple entre 5 et 15 degrés, par rapport à l'écoulement de fluide, une hauteur de l'ordre de 2 à 8% de celle des aubes 205, et des décalages axial et latéral entre chaque paire d'ailettes adjacentes. Dans ce mode de réalisation, les ailettes 215 peuvent notamment avoir été moulées d'une pièce avec la virole externe 207 et le reste de l'aubage de redressement 203, et éventuellement été soumises à une reprise de finition en sortie de fonderie, ou avoir été fabriquées séparément et ensuite fixées par des moyens conventionnels sur la virole externe 207. Alternativement, elles peuvent toutefois avoir été usinées dans la masse de la virole externe 207.

Bien que dans les premier et deuxième modes de réalisation les dispositifs de génération de tourbillons soient disposés directement en amont de l'aubage de redressement, afin d'empêcher la formation de tourbillons de coin dans l'aubage de redressement, il est aussi possible, alternativement ou en complément à ces autres arrangements, de situer des dispositifs analogues en amont de l'aubage mobile. Ainsi, dans un troisième mode de réalisation illustré sur la figure 7, un élément de compresseur 300 comprend un aubage mobile 302 sous forme de rotor, avec une pluralité d'aubes 304 arrangées radialement autour d'un axe central X, et décalées les unes des autres en une direction latérale, c'est-à-dire circonférentielle. Cet élément de compresseur 300 est destiné à tourner autour de l'axe central X, afin d'impulser un fluide de travail dont l'écoulement sera ensuite redressé vers une direction axiale, sensiblement parallèle à l'axe central X et perpendiculaire à la direction latérale, par un aubage de redressement formant un stator fixe (non illustré). Dans cet aubage rotatif 302, chaque aube 304 présente un pied d'aube 304a solidaire d'un moyeu 306, et une tête d'aube 304b, et l'ensemble de trois dispositifs 315 de génération de tourbillons est situé en amont de chaque pied d'aube 304a, afin d'empêcher au moins partiellement la formation de tourbillons de coin dans le rotor 302. La forme, arrangement et fonctionnement de ces ailettes 315 est, pour le reste, sensiblement analogue à celui des ailettes des modes de réalisation précédents, avec un angle d'attaque relativement faible, par exemple entre 5 et 15 degrés, par rapport à l'écoulement de fluide, une hauteur de l'ordre de 2 à 8% de celle des aubes 305, et des décalages axial et latéral entre chaque paire d'ailettes adjacentes. Typiquement, elles peuvent avoir été usinées dans la masse du moyeu 306. Toutefois, elles peuvent alternativement avoir été moulées d'une pièce avec le moyeu 306 et le reste du rotor 302, et éventuellement été soumises à une reprise de finition en sortie de fonderie, ou avoir été fabriquées séparément et ensuite fixées par des moyens conventionnels sur le moyeu 306.

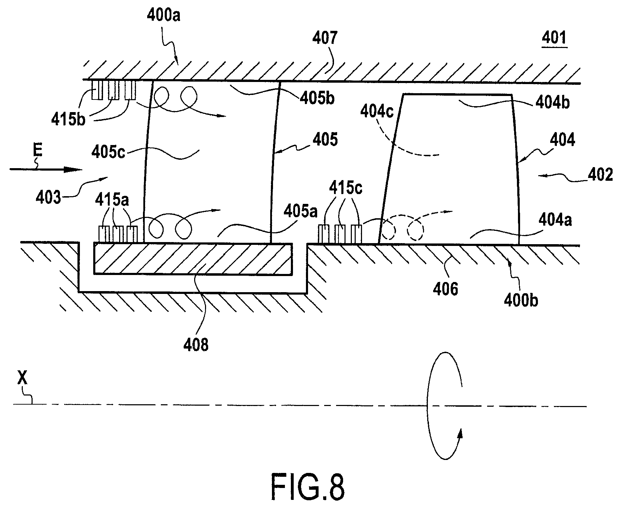

Bien que dans les modes de réalisation précédents les dispositifs de génération de tourbillons soient disposés sur des éléments de compresseur, il est aussi possible d'appliquer le même principe sur d'autres éléments de turbomachines, comme par exemple sur des éléments de pompe ou des éléments de turbine. Ainsi, sur la figure 8 est illustré un étage de turbine 401 comprenant un premier élément de turbine 400a avec un aubage fixe de guidage 403 en forme de stator et, en aval de celui-ci, un deuxième élément de turbine 400b avec un aubage mobile 402 en forme de rotor. L'aubage de guidage 403 comporte une pluralité d'aubes 405 arrangées radialement autour d'un axe central X, et décalées les unes des autres en une direction latérale, c'est-à-dire circonférentielle. Dans cet aubage de guidage 403, comme dans le premier mode de réalisation, chaque aube 405 présente un pied d'aube 405a solidaire d'une virole interne 408, et une tête d'aube 405b solidaire d'une virole externe 407. Afin d'empêcher, au moins partiellement, la formation de tourbillons de coin au pied d'aube 405a, entre l'extrados 405c et la virole interne 408, ainsi qu'à la tête d'aube 405b, entre l'extrados 405c et la virole externe 407, ce premier élément de turbine 400, suivant un quatrième mode de réalisation, comporte aussi un ensemble de trois dispositifs 415a de génération de tourbillons en amont de chaque pied d'aube 405a, sous forme d'ailettes droites solidaires de la virole interne 408, et un ensemble de trois dispositifs 415b de génération de tourbillons en amont de chaque tête d'aube 405b, sous forme d'ailettes droites solidaires de la virole externe 407. La forme, arrangement et fonctionnement de ces deux ensembles d'ailettes 415a et 415b est, pour le reste, sensiblement analogue à celui des ailettes des premier et deuxième modes de réalisation, avec un angle d'attaque relativement faible, par exemple entre 5 et 15 degrés, par rapport à l'écoulement de fluide, une hauteur de l'ordre de 2 à 8% de celle des aubes 405, et des décalages axial et latéral entre chaque paire d'ailettes adjacentes. Elles peuvent également avoir été fabriquées par les mêmes procédés de production.

Le deuxième élément de turbine 400b, situé en aval de l'aubage de guidage 403, comporte un aubage mobile 402 en forme de rotor, avec une pluralité d'aubes 404 arrangées radialement autour de l'axe central X, et décalées les unes des autres en direction latérale. Ce deuxième élément de turbine 400b est destiné à tourner autour de l'axe central X, impulsé par l'écoulement de fluide. Dans l'aubage mobile 402, chaque aube 404 présente un pied d'aube 404a solidaire d'un moyeu 406, et une tête d'aube 404b, et l'ensemble de trois dispositifs 415c de génération de tourbillons est situé en amont de chaque pied d'aube 404a, afin d'empêcher au moins partiellement la formation de tourbillons de coin dans le rotor 402. La forme, arrangement et fonctionnement de ces ailettes 415c est, pour le reste, sensiblement analogue à celui des ailettes des modes de réalisation précédents, avec un angle d'attaque relativement faible, par exemple entre 5 et 15 degrés, par rapport à l'écoulement de fluide, une hauteur de l'ordre de 2 à 8% de celle des aubes 404, et des décalages axial et latéral entre chaque paire d'ailettes adjacentes. Elles peuvent également avoir été fabriquées par les mêmes procédés de production.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En particulier, des caractéristiques individuelles des différents modes de réalisation illustrés peuvent être combinées dans des modes de réalisation additionnels. En outre, bien que tous les dispositifs de génération de tourbillons illustrés soient en forme d'ailettes rectangulaires, d'autres formes, par exemple, des ailettes triangulaires, ou des encoches dans les viroles et/ou le moyeu, peuvent aussi être considérées par la personne du métier suivant les circonstances. Par conséquent, la description et les dessins doivent être considérés dans un sens illustratif plutôt que restrictif.

## Revendications

1. Elément de turbomachine (100,200,300,400a,400b) comprenant :
un aubage (103,203,302,402,403) avec une pluralité d'aubes (105,205,304,404,405) décalées les unes des autres en une direction latérale ; et
des dispositifs de génération de tourbillons (115,215,315,415a,415b,415c) disposés en amont dudit aubage (103,203,302,402,403) en une direction axiale perpendiculaire à ladite direction latérale ;
l'élément de turbomachine (100,200,300,400a,400b) étant **caractérisé en ce qu'**il comprend un ensemble de plusieurs dispositifs de génération de tourbillons (115,215,315,415a,415b,415c) en amont d'au moins une extrémité de chaque aube, les dispositifs de génération de tourbillons (115,215,315,415a,415b,415c) de chaque ensemble étant décalés tant latéralement qu'axialement entre eux.

2. Elément de turbomachine (100,200,300,400a,400b) suivant la revendication 1, dans lequel chaque ensemble comprend au moins trois dispositifs de génération de tourbillons (115,215,315,415a,415b,415c).

3. Elément de turbomachine (100,200,300,400a,400b) suivant l'une quelconque des revendications 1 ou 2, dont au moins certains des dispositifs de génération de tourbillons (115,215,315,415a,415b,415c) comportent au moins une ailette.

4. Elément de turbomachine (100,200,300,400a,400b) suivant la revendication 3, dans lequel l'ailette présente une corde sensiblement droite.

5. Elément de turbomachine (100,200,300,400a,400b) suivant l'une quelconque des revendications 1 à 4, dans lequel, dans chaque ensemble, les dispositifs de génération de tourbillons (115,215,315,415a,415b,415c) sont sensiblement parallèles.

6. Elément de turbomachine (100,200,300,400a,400b) suivant l'une quelconque des revendications précédentes, dans lequel les aubes (105,205,304,404,405) de l'aubage (103,203,302,402,403) sont arrangées radialement autour d'un axe central (X), chaque aube (105,205,304,404,405) présentant une extrémité proximale dite pied d'aube (105a,205a,304a,404a,405a) et une extrémité distale dite tête d'aube (105b,205b,304b,404b,405b).

7. Elément de turbomachine (100,300,400a,400b) suivant la revendication 6, dans lequel un ensemble de plusieurs dispositifs de génération de tourbillons (115,315,415a,415c) est situé en amont de chaque pied d'aube (105a,304a,404a,405a).

8. Elément de turbomachine (100,200) suivant l'une quelconque des revendications 1 à 7, dans lequel ledit aubage (103,203) est un aubage de redressement.

9. Turbomachine comprenant au moins un élément de turbomachine (100,200,300,400a,400b) suivant une quelconque des revendications 1 à 8.

10. Turbomachine suivant la revendication 9, dans laquelle ledit élément de turbomachine (100,200,300) est un élément de compresseur.

## Patentansprüche

1. Turbomaschinenelement (100, 200, 300, 400a, 400b), umfassend:
eine Beschaufelung (103, 203, 302, 402, 403) mit einer Vielzahl von Schaufeln (105, 205, 304, 404, 405), die in einer seitlichen Richtung zueinander versetzt sind, und
Wirbelerzeugungsvorrichtungen (115, 215, 315, 415a, 415b, 415c), die stromaufwärts der Beschaufelung (103, 203, 302, 402, 403) in einer zu der seitlichen Richtung senkrechten Axialrichtung angeordnet sind,
wobei das Turbomaschinenelement (100, 200, 300, 400a, 400b) **dadurch gekennzeichnet ist, dass** es eine Anordnung von mehreren Wirbelerzeugungsvorrichtungen (115, 215, 315, 415a, 415b, 415c) stromaufwärts wenigstens eines Endes jeder Schaufel umfasst, wobei die Wirbelerzeugungsvorrichtungen (115, 215, 315, 415a, 415b, 415c) einer jeden Anordnung sowohl seitlich als auch axial untereinander versetzt sind.

2. Turbomaschinenelement (100, 200, 300, 400a, 400b) nach Anspruch 1, wobei jede Anordnung wenigstens drei Wirbelerzeugungsvorrichtungen (115, 215, 315, 415a, 415b, 415c) umfasst.

3. Turbomaschinenelement (100, 200, 300, 400a, 400b) nach einem der Ansprüche 1 oder 2, von welchem wenigstens einige der Wirbelerzeugungsvorrichtungen (115, 215, 315, 415a, 415b, 415c) wenigstens einen Flügel umfassen.

4. Turbomaschinenelement (100, 200, 300, 400a, 400b) nach Anspruch 3, wobei der Flügel eine im Wesentlichen gerade Sehne aufweist.

5. Turbomaschinenelement (100, 200, 300, 400a, 400b) nach einem der Ansprüche 1 bis 4, wobei bei jeder Anordnung die Wirbelerzeugungsvorrichtungen (115, 215, 315, 415a, 415b, 415c) im Wesentlichen parallel sind.

6. Turbomaschinenelement (100, 200, 300, 400a, 400b) nach einem der vorhergehenden Ansprüche, wobei die Schaufeln (105, 205, 304, 404, 405) der Beschaufelung (103, 203, 302, 402, 403) um eine Mittelachse (X) radial angeordnet sind, wobei jede Schaufel (105, 205, 304, 404, 405) ein proximales Ende, sogenannten Schaufelfuß, (105a, 205a, 304a, 404a, 405a) und ein distales Ende, sogenannten Schaufelkopf, (105b, 205b, 304b, 404b, 405b) aufweist.

7. Turbomaschinenelement (100, 300, 400a, 400b) nach Anspruch 6, wobei eine Anordnung von mehreren Wirbelerzeugungsvorrichtungen (115, 315, 415a, 415c) stromaufwärts eines jeden Schaufelfußes (105a, 304a, 404a, 405a) angeordnet ist.

8. Turbomaschinenelement (100, 200) nach einem der Ansprüche 1 bis 7, wobei die Beschaufelung (103, 203) eine Leitbeschaufelung ist.

9. Turbomaschine, die wenigstens ein Turbomaschinenelement (100, 200, 300, 400a, 400b) nach einem der Ansprüche 1 bis 8 umfasst.

10. Turbomaschine nach Anspruch 9, wobei das Turbomaschinenelement (100, 200, 300) ein Verdichterelement ist.

## Claims

1. A turbomachine element (100, 200, 300, 400a, 400b) comprising:
an airfoil set (103, 203, 302, 402, 403) with a plurality of airfoils (105, 205, 304, 404, 405) offset from one another in a lateral direction; and
vortex generator devices (115, 215, 315, 415a, 415b, 415c) arranged upstream from said set (103, 203, 302, 402, 403) in an axial direction perpendicular to said lateral direction;
the turbomachine element (100, 200, 300, 400a, 400b) being **characterized in that** it has a group of a plurality of vortex generator devices (115, 215, 315, 415a, 415b, 415c) upstream from at least one end of each airfoil, the vortex generator devices (115, 215, 315, 415a, 415b, 415c) of each group being mutually offset both laterally and axially.

2. A turbomachine element (100, 200, 300, 400a, 400b) according to claim 1, wherein each group of vortex generator devices has at least three such devices (115, 215, 315, 415a, 415b, 415c).

3. A turbomachine element (100, 200, 300, 400a, 400b) according to claim 1 or claim 2, in which at least some of the vortex generator devices (115, 215, 315, 415a, 415b, 415c) comprise at least one fin.

4. A turbomachine element (100, 200, 300, 400a, 400b) according to claim 3, wherein the fin presents a chord that is substantially straight.

5. A turbomachine element (100, 200, 300, 400a, 400b) according to any one of claims 1 to 4, wherein the vortex generator devices (115, 215, 315, 415a, 415b, 415c) in each group are substantially parallel.

6. A turbomachine element (100, 200, 300, 400a, 400b) according to any preceding claim, wherein the airfoils (105, 205, 304, 404, 405) of each set (103, 203, 302, 402, 403) are arranged radially around a central axis (X), each airfoil (105, 205, 304, 404, 405) presenting a proximal end (105a, 205a, 304a, 404a, 405a) referred to as its root and a distal end (105b, 205b, 304b, 404b, 405b) referred to as its tip.

7. A turbomachine element (100, 300, 400a, 400b) according to claim 6, wherein a group comprising a plurality of vortex generator devices (115, 315, 415a, 415c) is situated upstream from each said root (105a, 304a, 404a, 405a).

8. A turbomachine element (100, 200) according to any one of claims 1 to 7, wherein said airfoil set (103, 203) is a flow-straightening outlet guide vane set.

9. A turbomachine including at least one turbomachine element (100, 200, 300, 400a, 400b) according to any one of claims 1 to 8.

10. A turbomachine according to claim 9, wherein said turbomachine element (100, 200, 300) is a compressor element.
